# EUROPEAN PATENT APPLICATION

(11) **EP 4 046 848 A1**
(43) Date of publication of application: **24.08.2022**
(21) Application number: 22157572.3
(22) Date of filing: 18.02.2022
(51) Int. Cl.: B60L 1/10, B60L 9/00, B60L 50/53, B60H 1/00

(54) **OPERATING A VEHICLE ON AN ELECTRIFIED ROUTE AND WITHOUT BEING SUPPLIED WITH ELECTRIC ENERGY FROM A ROUTE**

(30) Priority: 18.02.2021 GB 202102316
(71) Applicant: Bombardier Transportation GmbH, 10785 Berlin (DE)
(72) Inventor: Buschbeck, Jan, 12109 Berlin (DE); von Mach, Stefan, 13189 Berlin (DE); Veintimilla Porlán, Julia, 81369 München (ES); Rogge, Max, 13347 Berlin (DE); Thomas, Falk, 16761 Hennigsdorf (DE)
(74) Representative: Brunotte, Joachim Wilhelm Eberhard

(57) **Abstract**

The invention relates to a method of operating a vehicle (1) that is adapted to drive on electrified routes while being supplied with electric energy from an electric line (6) of a respective electrified route (R1) and is adapted to drive on routes while not being supplied with electric energy from any electric line of a respective route, wherein
- heat from a heat generating device (11) of the vehicle (1) is used temporarily, while the vehicle (1) is driving or stopping on a route while not being supplied with electric energy from any electric line of the route, as heat input to a functional system on board the vehicle (1),
- the functional system uses the heat input for performing a function other than transferring the heat input to the ambience of the vehicle (1).

## Description

The invention relates to a method of operating a vehicle that is adapted to drive on electrified routes while being supplied with electric energy from an electric line of a respective electrified route and is adapted to drive on routes while not being supplied with electric energy from any electric line of a respective route. Furthermore, the invention relates to such a vehicle.

It is known to use heat from a heat generating device of a track-bound vehicle for at least one functional system of the vehicle. Examples of heat generating devices of track-bound vehicles like rail vehicles and trolley buses are electric transformers adapted to transform voltages of electric lines (in particular AC lines) of vehicle routes, other inductances for connecting an electric system of the vehicle to electric lines (in particular DC lines) of vehicle routes, electric switching devices (e.g. semiconductor switches like IGBTs) of current converters for rectifying alternating currents from electric lines of vehicle routes and of current converters for inverting direct currents into alternating currents (in particular an alternating current that is provided to at least one traction motor of the vehicle), energy storages like battery systems for operating a vehicle in particular while the vehicle is not supplied with electric energy from any electric line of the route on which the vehicle drives or stops, electric traction motors of vehicles, brakes for braking a vehicle and exhaust air systems for guiding exhaust and from a vehicle compartment to the ambience of the vehicle. In all these cases, and in case of other heat generating devices of vehicles, waste heat is to be transferred away from the respective heat generating device.

It is also known to transfer waste heat to energy storages and to store heat as heat and/or in a different form of energy, such as electrochemical energy and/or latent heat. However, the use of energy storages requires substantial space and effort.

The present invention provides a solution for vehicles that are only temporarily provided with electric energy from an electric line of a route on which the vehicle travels or stops.

It is proposed to temporarily use heat from a heat generating device of the vehicle, while the vehicle is driving or stopping on a route while not being supplied with electric energy from any electric line of the route, as heat input to a functional system on board the vehicle. In particular, a traction system of the vehicle may be operated by using energy retrieved from an energy storage on board the vehicle during this time.

The functional system uses the heat input for performing a function other than transferring the heat input to the ambience of the vehicle. This does not exclude that some of the heat input is transferred to the ambience, but it is not the sole purpose of the functional system to transfer the heat input to the ambience. At least some of the heat input may be used for providing energy for operation of the functional system and/or may be used by the functional system for providing energy according to the intended purpose of the functional system. An example of a functional system that uses the heat input to provide energy for operation of the functional system is an air-conditioning system that requires a heat source. An example of a functional system that uses the heat input for providing energy is a heating system. More general speaking, the functional system may be a heating and/or air-conditioning system of at least one compartment of the vehicle Therefore, a heating and/or air conditioning system of the vehicle may use the heat input in both ways. The compartment which is heated and/or air-conditioned may be a passenger compartment, a driver compartment or other type of vehicle staff compartment and/or a freight compartment. In particular, an air conditioning system may comprise a chiller, i.e. a machine which uses heat for cooling. Another example of a functional system is a latent heat storage that stores energy by performing a phase change of at least one substance.

According to the attached patent claims, a method is proposed of operating a vehicle that is adapted to drive on electrified routes while being supplied with electric energy from an electric line of a respective electrified route and is adapted to drive on routes while not being supplied with electric energy from any electric line of a respective route, wherein
- heat from a heat generating device of the vehicle is used temporarily, while the vehicle is driving or stopping on a route while not being supplied with electric energy from any electric line of the route, as heat input to a functional system on board the vehicle,
- the functional system uses the heat input for performing a function other than transferring the heat input to the ambience of the vehicle.

Furthermore, a vehicle is proposed that is adapted to drive on electrified routes while being supplied with electric energy from an electric line of a respective electrified route and is adapted to drive on routes while not being supplied with electric energy from any electric line of a respective route, wherein the vehicle comprises
- a heat generating device,
- a functional system that is adapted to use heat input for performing a function other than transferring the heat input to the ambience of the vehicle,
- a control device that is adapted to control temporary heat transfer from the heat generating device, while the vehicle is driving or stopping on a route while not being supplied with electric energy from any electric line of the route, to the functional system.

Specific embodiments of the method and of the vehicle correspond to each other so that the disclosure of an embodiment of the method also constitutes the disclosure of a corresponding embodiment of the vehicle and vice versa.

The term "not being supplied with electric energy from any electric line of the route" includes operation of the vehicle on an electrified route while no energy is supplied from the electric line of the route to the vehicle and includes operation of the vehicle on a non-electrified route.

The term "a function other than transferring the heat input to the ambience of the vehicle" means, as mentioned above, that the heat input is not completely transferred to the ambience of the vehicle, especially over a considered time interval.

The temporary use of the heat input to the functional system or the heat transferred from the heat generating device to the functional system means that there are time intervals - while the vehicle is driving or stopping on an electrified route while being provided with electric energy from an electric line of the route - when no heat from the heat generating device is transferred to the functional system or no heat from the heat generating device is used by the functional system. This does not exclude that there are also usage time intervals - while the vehicle is driving or stopping on an electrified route while being provided with electric energy from an electric line of the route - when heat from the heat generating device is transferred to the functional system and is used by the functional system. These usage time intervals may be transition time intervals during transition from the vehicle being supplied with electric energy from an electric line of the route to not being supplied with electric energy from any electric line of the route or of another route or vice versa. In addition or alternatively, these usage time intervals may be time intervals when the rate of heat input (i.e., the heat input power) that is used by the functional system is smaller than the rate of heat input while the vehicle is not supplied with electric energy from any electric line of a route on which the vehicle currently drives or stops.

In all of these cases, the temporary, time-dependent use of input heat by the functional system has the advantage that no heat storage is required.

The invention is particularly useful with respect to electrified route dependent heat generating devices that are operated only and/or that generate heat at a higher rate (i.e., more heat power) while the vehicle is stopping or traveling on an electrified route while being provided with electric energy from an electric line of the route. Before, while and/or after a transition to an operation of the vehicle while not being supplied with electric energy from any electric line of a route, heat produced by such an electrified route dependent heat generating device is transferred to the functional system as the heat input to the functional system. Examples of this type of electrified route dependent heat generating devices are all devices of vehicles that generate heat while being operated for the purpose of supplying electric energy from the electric line of the route to the vehicle for operating the vehicle. Specific examples are electric switching devices (e.g., semiconductor switches like IGBTs) of current converters for rectifying alternating currents from electric lines of vehicle routes are other examples. Other examples are transformers (often called "main transformers" in case of AC electric lines) and other inductances (in case of DC electric lines) which conduct an electric current from the electric line of the electrified route while the vehicle is driving or stopping on the electrified route as mentioned above. Especially, heat is stored in the material of the electrical windings, in the material of the magnetic core and/or in the cooling liquid of the transformer or inductance.

In many cases, the electrified route dependent heat generating devices require reliable constant cooling and a corresponding cooling device therefore transfers waste heat from the heat generating device to the ambience of the vehicle. A functional device as recipient of the waste heat might not be reliable as constant heat sink to the same extent. However, as soon as it is sure or known that the operation of the vehicle with energy from the route's electric line terminates, the transfer of the waste heat to the ambience of the vehicle may be stopped or may be reduced without endangering the operation or state of the heat generating device and the waste heat may be transferred to the functional system.

A coolant for cooling any heat generating device of the vehicle is generally useful with respect to the present invention, not only in case of inductances. During operation of the vehicle while being supplied with electric energy from an electric line of the route, the coolant cools the heat generating device and transfers the heat away, typically to the ambience of the vehicle. After the transition to operation of the vehicle while not being supplied with electric energy from any electric line of the route, there is typically still a substantive amount of heat stored within the coolant. Therefore, the coolant can then be directed to the functional system in order to provide heat input to the functional system. In particular, the coolant may be a liquid coolant.

It is preferred that the flow of the coolant is controlled. Means of control are in particular at least one pump for generating coolant flow and/or at least one valve. The valve may be adapted/used to block coolant flow, to allow coolant flow and/or to reduce or increase coolant flow. There may be a control device that controls operation of the at least one pump and/or the at least one valve.

Not only with respect to the electrified route dependent heat generating devices, information on a transition from
- supplying the vehicle with electric energy from an electric line of an electrified route to
- operating the vehicle on a route while not being supplied with electric energy from any electric line of the route
may be used to start the heat input and/or increase a rate of the heat input from the heat generating device to the functional system. The control device of the vehicle may be adapted to function accordingly. The control device may be a central control device of the vehicle or may be a specific control device for controlling the temporary heat transfer from the heat generating device to the functional system only. In case of the central control device, the control device may also control the operation of the traction system of the vehicle, the braking system of the vehicle, the heating and/or air conditioning system and/or a vehicle-wide signaling system.

The heat input to the functional system may not be the only input of energy to the functional system. For example, operation of the functional system may require electrical energy. Examples of this type of functional systems are heat pumps for elevating the temperature level of the input heat, but also functional systems with any other electrical device. For example, a compartment heating and/or air conditioning system typically comprises pumps for pumping air through air lines and a control device for controlling the heating system.

Some examples of heat generating devices have been mentioned. More generally speaking, the heat generating device may generate the heat while being operated as part of a traction system of the vehicle, of a braking system of the vehicle and/or of an auxiliary system for supporting the traction system of the vehicle. Examples of such devices of an auxiliary system are a control device for controlling the operation of a power converter that converts electric currents for providing vehicle traction energy and electric resistors for dissipating electric energy during dynamic braking of the vehicle. Therefore, further examples include the cases that the heat generating device is part of a traction system of the vehicle, of a braking system of the vehicle and/or of an auxiliary system for supporting the traction system of the vehicle. In particular, the heat generating device may comprise an inductance which conducts an electric current from an electric line of an electrified route while the vehicle is driving or stopping on the electrified route. All examples of the heat generating device not only apply to the vehicle, but they may also be part of the method. Therefore, with respect to the method, the heat generating device may for example generate the heat while being operated as part of a traction system of the vehicle, of a braking system of the vehicle and/or of an auxiliary system for supporting the traction system of the vehicle. In particular, the heat generating device may comprise an inductance which conducts an electric current from an electric line of an electrified route while the vehicle is driving or stopping on the electrified route.

As mentioned above, temporary heat transfer from the heat generating device to the functional system may include the case that heat from the heat generating device of the vehicle
- is not used as heat input to the functional system while the vehicle is driving or stopping on a route while being supplied with electric energy from an electric line of the route or
- is used as heat input to the functional system to a smaller extent - compared to an operation of the vehicle while the vehicle is not supplied with electric energy from any electric line of a route - while the vehicle is driving or stopping on a route while being supplied with electric energy from any electric line of the route.

The term "smaller extent" in particular means a smaller rate of heat input, i.e., smaller heat power. In addition or alternatively, it means intermittently providing the heat input in contrast to permanently providing the heat input. The intermittent use of the heat input to the functional system may be controlled depending on the power of waste heat generated by the heat generating device and/or depending on the heat that is transferred to the ambience of the vehicle by a cooling device for cooling the heat generating device.

In particular, the vehicle may comprise an energy storage adapted to provide energy stored in the energy storage for operation of the vehicle while the vehicle is driving or stopping on a route while not being supplied with electric energy from any electric line of the route. An example of such an energy storage is a battery system, e.g., with electrochemical battery cells. A cooling device of the vehicle is adapted to actively cool the heat generating device by forced circulation of a cooling fluid while the vehicle is driving or stopping on a route while being supplied with electric energy from an electric line of the route, thereby transferring heat from the heat generating device to the ambience of the vehicle. According to the specific embodiment described here, the heat transfer from the heat generating device to the ambience of the vehicle is reduced or stopped while the vehicle is driving or stopping on a route while not being supplied with electric energy from any electric line of the route. The control device can be adapted to control the reduction or stopping of the heat transfer to the ambience. As a result, energy for heat transfer to the ambience can be saved, especially in case of the above-mentioned electrified route dependent heat generating devices. In addition or alternatively, stopping or reducing the heat transfer to the ambience of the vehicle enables heat input to the functional system. An example of a corresponding embodiment with control of the cooling device and of the heat input to functional system will be described with reference to the attached figures.

The control device may be adapted to use information on a transition, from supplying the vehicle with electric energy from an electric line of an electrified route to operating the vehicle on a route while not being supplied with electric energy from any electric line of the route, to reduce or stop the heat transfer from the heat generating device to the ambience of the vehicle. The origin of this kind of information may be, for example, a map of the routes on which the vehicle may travel in combination with positional information about the current position of the vehicle and/or any information retrieved from the route, for example via transponders or beacons of the route. Alternatively, the vehicle may determine its position for example by using a receiver of a global navigation satellite system (GNSS). In addition or alternatively, the vehicle may receive the information on the transition from a control center of the railway or of the railway system. For example, a wireless signal received from the control center may trigger the reduction or stopping of the heat transfer from the heat generating device to the ambience of the vehicle.

In particular, the information on the transition may be used to reduce or stop the heat transfer from the heat generating device to the ambience of the vehicle while the vehicle is still supplied with electric energy from an electric line of the route. In this manner, more heat is available to the functional system while the vehicle is not supplied with electric energy from any electric line of the route.

Examples of the present invention will be described with reference to the attached figures. The figures show:
- Fig. 1: schematically a railway vehicle traveling on an electrified route which passes over to a non-electrified route,
- Fig. 2: an arrangement comprising a heat generating device, a cooler and a heat interface to a functional system, wherein coolant lines connect the heat generating device with the cooler and the heat interface,
- Fig. 3: an arrangement similar to the arrangement of Fig. 2 with a modified location of a pump for forced circulation of the coolant to the cooler,
- Fig. 4: an arrangement similar to the arrangements of Fig. 2 and Fig. 3 comprising an arrangement of valves for controlling coolant flow to the heat interface,
- Fig. 5: an arrangement similar to the arrangement of Fig. 3 comprising a thermostat and a cooler bypass,
- Fig. 6: an arrangement comprising a heat generating device, a heat interface to a functional system and a cooler, wherein the heat interface and the cooler are arranged along the same coolant line.

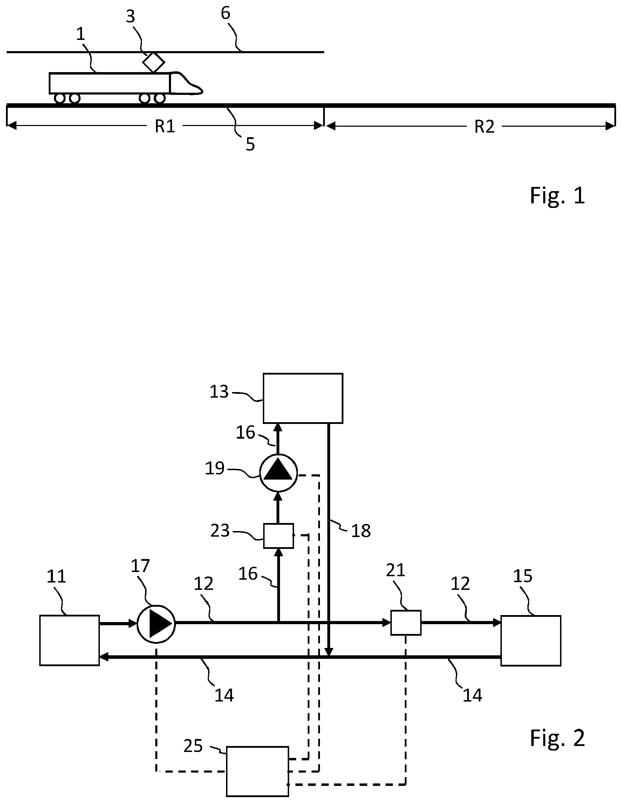

Fig. 1 shows a railway vehicle 1 while stopping or driving on rails 5 of a first route R1. The railway vehicle 1 comprises a current collector 3 which electrically contacts an electric line 6 of the first route R1. Therefore, the first route R1 is an electrified route. The first route R1 passes over to a second route R2 which is not electrified. The railway vehicle 1 can be operated on the first route R1 while being supplied with electric energy from the electric line 6, can be operated on the first route R1 while not being supplied with electric energy from the electric line 6 and can be operated on the second route R2. In particular, the railway vehicle 1 comprises an energy storage, such as a battery system (not shown), that may be charged by using electric energy while the rail vehicle 1 is supplied with electric energy from an electric line of a route. Later, while the rail vehicle 1 is not supplied with electric energy from an electric line of a route, energy is retrieved from the energy storage for operation of the railway vehicle 1, in particular for operating at least one traction motor of the railway vehicle 1.

Other than shown in Fig. 1, the electric line may not be an overhead electric line. For example, the electric line may be a third rail. In addition or alternatively, the vehicle may not be a railway vehicle, but another kind of vehicle (e.g., a trolley bus) that is adapted to be supplied with electric energy from an electric line of a route on which the vehicle stops or travels.

While the vehicle is stopping or traveling on the first route R1 and while the vehicle is supplied with electric energy from the electric line of the first route R1, waste heat from a heat generating device 11 (see Fig. 2, e.g., a main transformer) is transferred away from the heat generating device 11 by using a coolant that flows through a first coolant line 12. In the example shown in Fig. 2, the first coolant line 12 connects the heat generating device 11 with a cooler 15 that is adapted to transfer heat from the coolant to the ambience of the vehicle. There is a main pump 17 in the first coolant line 12 for forced circulation through the first coolant line 12 and a second coolant line 14 through which the coolant can return from the cooler 15 to the heat generating device 11.

A third coolant line 16 branches off from the first coolant line 12 and is adapted to guide coolant to a heat interface 13 to the functional system (e.g., a heating and/or air conditioning system of the vehicle). There is a second pump 19 in the third coolant line 16 for forced circulation through the third coolant line 16 and through a fourth coolant line 18 adapted to return the coolant from the heat interface 13 to the heat generating device 11 via the second coolant line 14.

The heat interface 13 may be a heat exchanger, for example a heat exchanger for transferring heat to a heating and/or air conditioning system of the vehicle. Alternatively, the heat interface 13 may be a radiator of the heating system for directly transferring heat to the respective compartment of the vehicle.

A first valve 21, in particular a one-way valve, is arranged in the first coolant line 12. A second valve 23 is arranged in the third coolant line 16. When the first valve 21 is open, coolant can flow from the heat generating device 11 through the first coolant line 12 to the cooler 15. When the second valve 23 is open, coolant can flow from the heat generating device 11 through part of the first coolant line 12 and the second coolant line 16 to the heat interface 13. In a first operating mode, the first valve 21 is open and the second valve 23 is closed, so that the coolant can flow to the cooler 15 only. In a second operating mode, the first valve 21 is closed and the second valve 23 is open, so that the coolant can flow to the heat interface 13 only. Optionally, there is a third operating mode in which the first valve 21 and the second valve 23 are open at the same time. In this operating mode, coolant can flow to the cooler 15 and to the heat interface 13 so that heat is transferred to both of them. This mode can be useful, for example, while the vehicle is not supplied with electric energy from any electric line of the route and if the waste heat from the heat generating device cannot be used completely by the functional system.

Furthermore, the arrangement comprises a control device 25 for controlling the operation of at least one of the main pump 17, the second pump 19, the first valve 21 and the second valve 23, as schematically indicated by dashed lines to the respective component of the arrangement. Before, during and/or after transition from the first route R1 to the second route R2, the control device 25 may control a transition from the first operating mode to the second operating mode or from the first operating mode to the third operating mode.

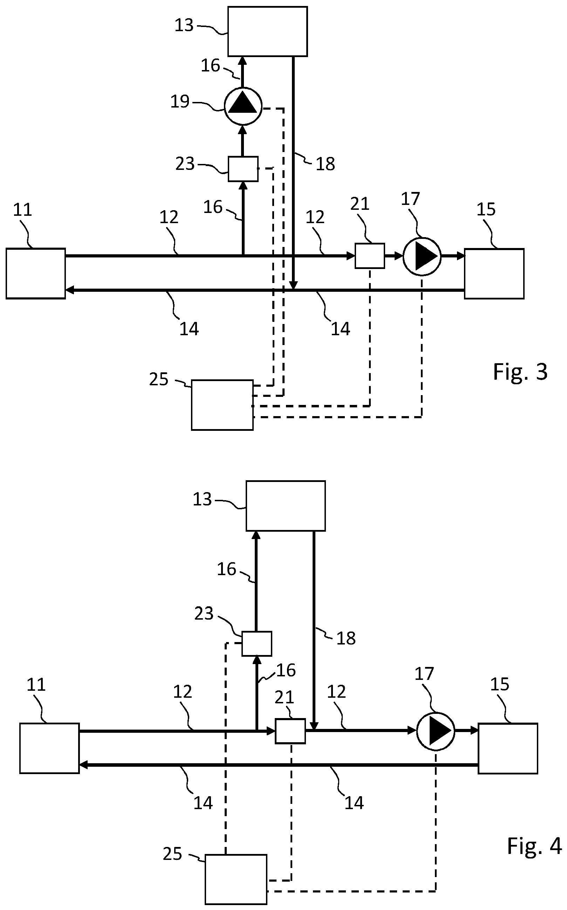

Fig. 3 shows an arrangement comprising all components shown in Fig. 2, but with a different location of the main pump 17. In this arrangement, the main pump 17 generates the coolant flow through the cooler 15 in all operational situations. Of course, this includes the operational situation in which no coolant flow is generated by the main pump 17. The first valve 21 may be closed in this situation.

In the arrangement shown in Fig. 4, the second pump is omitted and the first valve 21 is located between the location where the third coolant line 16 branches off from the first coolant line 12 and a location where the fourth coolant line 18 is connected to the first coolant line 12. In contrast to the arrangements shown in Fig. 2 and Fig. 3, the fourth coolant line 18 is not connected to the second coolant line 14, so that the coolant that returns from the heat interface 13 also flows through the cooler 15.

In all arrangements shown in Fig. 2, Fig. 3 and Fig. 4, coolant flow through the first coolant line 12 and through the second coolant line 14 necessarily means that the coolant flows to a device which is adapted to transfer heat from the coolant to the corresponding heat sink. This device is either the cooler 15 (with the heat sink "ambience") or the heat interface 13 (for example with the heat sink "heating and/or air conditioning system). The only option to avoid or reduce heat transfer to the respective heat sink while the coolant flows is to control the heat transfer capabilities of the cooler 15 and of the heat interface 13. However, some types of coolers and heat interfaces may not be controllable or may be controllable only to a small extent with respect to their heat transfer capabilities.

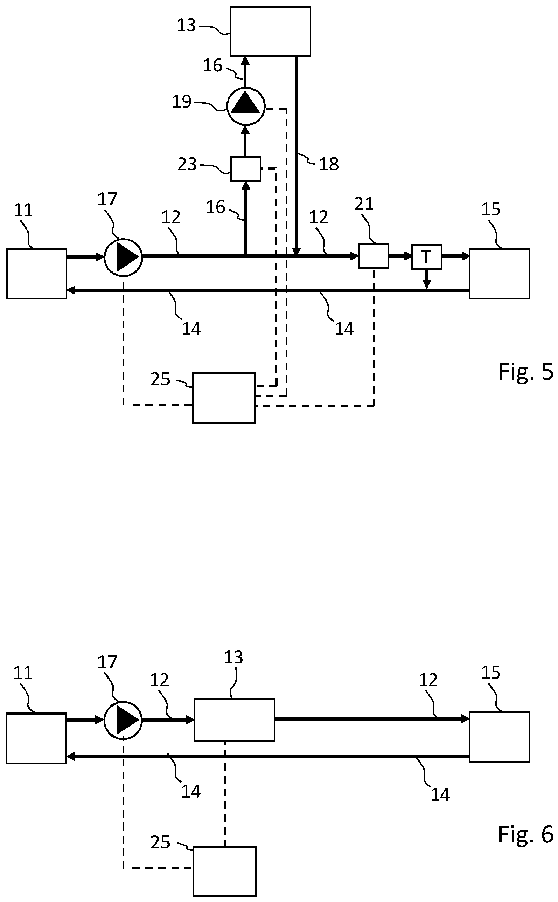

Fig. 5 shows an arrangement comprising all components shown in Fig. 2 and comprising a thermostat T that is arranged in the first coolant line 12 in flow direction between the first valve 21 and the cooler 15. The thermostat T is adapted to allow coolant passage to the cooler 15 if the temperature of the coolant at the thermostat T is above a threshold temperature, for example a pre-set threshold temperature in the range from 80 to 90°C. If the coolant temperature at the thermostat T is smaller than the threshold temperature, the coolant is effected by the thermostat T to bypass the cooler 15 so that the coolant directly returns through the second coolant line 14 to the heat generating device 11, without passing through the cooler 15. Therefore, heat transfer to the heat interface 13 is prioritized.

This kind of bypassing the cooler 15 may also be provided in variants of the arrangements shown in Fig. 2, Fig. 3 and Fig. 4. Furthermore, the type of thermostat may be different in any of the arrangements, including the arrangement shown in Fig. 5. In particular, the thermostat may have a different threshold temperature or may be controllable with regard to the threshold temperature or may be controllable to completely open the bypass to the cooler 15.

In all cases, in particular depending on the threshold temperature and/or control state of the thermostat, at least some of the coolant can flow through the first coolant line 12 and through the second coolant line 14 without transferring heat to the cooler 15. Therefore, coolant may flow permanently and, at least to some extent, may store heat. In addition, this reduces heat transfer away from the heat generating device 11. In particular this operational state can be used to store heat temporarily, while the vehicle is driving or stopping on a route while not being supplied with electric energy from any electric line of the route, but when a transition is expected to operating the vehicle while the vehicle is not supplied with electric energy from any electric line of a route.

Generally speaking, not only with reference to Fig. 4, a coolant circuit for cooling a heat generating device (such as a main transformer of a rail vehicle) may require permanent circulation of the coolant, in order to avoid hot spots, even if the resulting heat transfer from the heat generating device away is zero or can be neglected. This resulting heat transfer may be zero, neglectable or very small for example because the transfer from the coolant to any heat sink, such as the ambience and the functional system, is reduced or stopped for example by reducing or stopping air ventilation. If the coolant is a liquid coolant, the transfer of heat from the coolant to the heat sink (the ambience or the functional system) can be performed, in particular, by a liquid-to-liquid heat exchanger or by a liquid-to-air heat exchanger. In both cases, the rate of heat exchange provided by the heat exchanger can be controlled. In case of a liquid-to-liquid heat exchanger the liquid flow on the secondary side of the heat exchanger can be controlled, for example by controlling the flow generated by a pump. In case of a liquid-to-air heat exchanger the airflow on the secondary side of the heat exchanger can be controlled, for example by controlling the power of a ventilator that generates the airflow.

In an operational situation in which a transition from operating the vehicle while being supplied with electric energy from an electric line of the route to operating the vehicle while not being supplied with electric energy from any electric line of the route has begun or is expected, such a permanent coolant circulation without or with neglectable heat transfer power away from the heat generating device is preferred. Therefore, waste heat from the heat generating device can be accumulated temporarily within the coolant and, as soon as the functional system shall be provided with heat from the heat generating device, the accumulated heat within the coolant can be transferred to the functional system in addition to other heat stored by the heat generating device and/or produced by the heat generating device.

In this case, the arrangement shown in Fig. 4 can be operated as follows: While the vehicle is permanently supplied with electric energy from an electric line of the route on which the vehicle travels or stops, the first valve 21 is open and the second valve 23 is closed. Therefore, coolant circulates through the first coolant line 12, the cooler 15 and returns through the second coolant line 14 to the heat generating device 11, thereby transferring heat to the cooler 15 which in turn transfers the heat to the ambience of the vehicle. When the transition to the operation of the vehicle without being supplied with electric energy from any electric line of the route is imminent, the coolant is bypassed to the cooler 15. To control the bypass, there may be a controllable valve instead of the thermostat T, or the thermostat T may be controllable to override the thermostat function. In both cases, the control may be performed by the control device 25. Then, as soon as heat shall be transferred to the heat interface 13 of the functional system, the first valve 21 is closed and the second valve 23 is opened. As a result, heat accumulated in the coolant and heat from the heat generating device 11 is transferred to the heat interface 13. Closing the first valve 21 may be delayed in order to allow heat accumulated in coolant nearby the cooler 15 to return through the second coolant line 14 and to be delivered to the heat interface 13. in particular, closing the first valve 21 may be delayed by the time interval required for some circulations of coolant through the first coolant line 12 and the second coolant line 14.

Fig. 5 shows an arrangement with a heat generating device, a cooling circuit with a circulating coolant, a heat interface to a functional system and a cooler, but in different arrangement compared to the arrangements shown in Fig. 2 to Fig. 4. The first coolant line 12 connects the heat generating device 11 with the heat interface 13 and with the cooler 15. In particular, as shown in Fig. 5, the cooler 15 is arranged in flow direction of the coolant after the heat interface 13. For example, the control device 25 may be adapted to not only control the first coolant pump 17, which may be the only coolant pump in the coolant circuit, but also to control the heat transfer from the cooler 15 to the ambience of the vehicle.

For example, the cooler 15 may comprise a first heat exchanger and a second heat exchanger, wherein the first and the second heat exchanger may be connected for the purpose of heat transfer by an additional coolant circuit (on a secondary side of the first heat exchanger). In this case, the control device 25 may control a coolant pump in the additional coolant circuit. Alternatively, the cooler 15 may be combined with a bypass and a valve controlled by the control device 25. By controlling the valve, the flow rate through the bypass is controlled which in turn allows controlling heat transfer to the cooler 15. Instead of a controllable valve, a thermostat may be provided at the bypass, as shown in Fig. 5.

Generally speaking, not only with reference to the examples described in connection with the attached figures, temporarily transferring heat from the heat generating device to the functional system reduces the total energy consumption of the vehicle. In many cases, transferring waste heat from the heat generating device to the ambience of the vehicle not only requires forced circulation of a coolant as described with reference to the attached figures, but also requires energy for operating the cooler which transfers the waste heat from the coolant to the ambience. For example, the cooler may comprise a fan. If the cooling power of the cooler is reduced or if the cooler is not operated, energy can be saved. Of course, by using waste heat from the heat generating device as heat input to the functional system while the vehicle is not supplied with electric energy from an electric line of the route, energy consumption during this time is reduced as well. As a result, an energy storage (such as a battery system, for example comprising electrochemical batteries) which supplies energy for operating the vehicle while the vehicle is not supplied with electric energy from an electric line of a route requires less charging and produces less heat. The depth of discharge of the energy storage is reduced.

## Claims

1. A method of operating a vehicle (1) that is adapted to drive on electrified routes while being supplied with electric energy from an electric line (6) of a respective electrified route (R1) and is adapted to drive on routes while not being supplied with electric energy from any electric line of a respective route, wherein
- heat from a heat generating device (11) of the vehicle (1) is used temporarily, while the vehicle (1) is driving or stopping on a route while not being supplied with electric energy from any electric line of the route, as heat input to a functional system on board the vehicle (1),
- the functional system uses the heat input for performing a function other than transferring the heat input to the ambience of the vehicle (1).

2. The method of claim 1, wherein heat from the heat generating device (11) of the vehicle (1)
- is not used as heat input to the functional system while the vehicle (1) is driving or stopping on a route while being supplied with electric energy from an electric line (6) of the route or
- is used as heat input to the functional system to a smaller extent - compared to an operation of the vehicle (1) while the vehicle (1) is not supplied with electric energy from any electric line of a route - while the vehicle (1) is driving or stopping on a route while being supplied with electric energy from any electric line of the route.

3. The method of claim 1 or 2, wherein information on a transition from
- supplying the vehicle (1) with electric energy from an electric line (6) of an electrified route (R1) to
- operating the vehicle (1) on a route while not being supplied with electric energy from any electric line of the route
is used to start the heat input and/or increase a rate of the heat input from the heat generating device (11) to the functional system.

4. The method of any one of claims 1 to 3, wherein
- energy stored in an energy storage of the vehicle (1) is used to operate the vehicle (1) while the vehicle (1) is driving or stopping on a route while not being supplied with electric energy from any electric line of the route,
- the heat generating device (11) is actively cooled by forced circulation of a cooling fluid while the vehicle (1) is driving or stopping on a route while being supplied with electric energy from an electric line (6) of the route, thereby transferring heat from the heat generating device (11) to the ambience of the vehicle (1) and
- the heat transfer from the heat generating device (11) to the ambience of the vehicle (1) is reduced, is smaller or is stopped while the vehicle (1) is driving or stopping on a route while not being supplied with electric energy from any electric line of the route.

5. The method of claim 4, wherein information on a transition from supplying the vehicle (1) with electric energy from an electric line (6) of an electrified route (R1) to operating the vehicle (1) on a route without electric energy supply to the vehicle (1) is used to reduce or stop the heat transfer from the heat generating device (11) to the ambience of the vehicle (1).

6. The method of claim 5, wherein the information on the transition is used to reduce or stop the heat transfer from the heat generating device (11) to the ambience of the vehicle (1) while the vehicle (1) is still supplied with electric energy from an electric line (6) of the route.

7. The method of any one of claims 1 to 6, wherein the functional system is a heating and/or air-conditioning system of at least one compartment of the vehicle (1).

8. The method of any one of claims 1 to 7, wherein the heat generating device (11) is an electrified route (R1) dependent heat generating device (11) that is operated only and/or that generates heat at a higher rate while the vehicle (1) is stopping or traveling on an electrified route (R1) while being provided with electric energy from an electric line (6) of the route.

9. A vehicle (1) that is adapted to drive on electrified routes while being supplied with electric energy from an electric line (6) of a respective electrified route (R1) and is adapted to drive on routes while not being supplied with electric energy from any electric line of a respective route, wherein the vehicle (1) comprises
- a heat generating device (11),
- a functional system that is adapted to use heat input for performing a function other than transferring the heat input to the ambience of the vehicle (1),
- a control device that is adapted to control temporary heat transfer from the heat generating device (11), while the vehicle (1) is driving or stopping on a route while not being supplied with electric energy from any electric line of the route, to the functional system.

10. The vehicle of claim 9, wherein the control device is adapted to control heat from the heat generating device (11) of the vehicle (1)
- not being used as heat input to the functional system while the vehicle (1) is driving or stopping on a route while being supplied with electric energy from an electric line (6) of the route (R1) or
- being used as heat input to the functional system to a smaller extent - compared to an operation of the vehicle (1) while the vehicle (1) is not supplied with electric energy from any electric line of a route - while the vehicle (1) is driving or stopping on a route while being supplied with electric energy from any electric line of the route.

11. The vehicle of claim 9 or 10, wherein the control device is adapted to use information on a transition from
- supplying the vehicle (1) with electric energy from an electric line (6) of an electrified route (R1) to
- operating the vehicle (1) on a route while not being supplied with electric energy from any electric line of the route
to start the heat transfer and/or increase a rate of the heat transfer from the heat generating device (11) to the functional system.

12. The vehicle of any one of claims 9 to 11, wherein
- the vehicle (1) comprises an energy storage adapted to provide energy stored in the energy storage for operation of the vehicle (1) while the vehicle (1) is driving or stopping on a route while not being supplied with electric energy from any electric line of the route,
- a cooling device of the vehicle (1) is adapted to actively cool the heat generating device (11) by forced circulation of a cooling fluid while the vehicle (1) is driving or stopping on a route while being supplied with electric energy from an electric line (6) of the route, thereby transferring heat from the heat generating device (11) to the ambience of the vehicle (1) and
- the control device is adapted to reduce or stop the heat transfer from the heat generating device (11) to the ambience of the vehicle (1) while the vehicle (1) is driving or stopping on a route while not being supplied with electric energy from any electric line of the route.

13. The vehicle of claim 12, wherein the control device is adapted to use information on a transition, from supplying the vehicle (1) with electric energy from an electric line (6) of an electrified route (R1) to operating the vehicle (1) on a route while not being supplied with electric energy from any electric line of the route, to reduce or stop the heat transfer from the heat generating device (11) to the ambience of the vehicle (1).

14. The vehicle of claim 13, wherein the control device is adapted to use the information on the transition to reduce or stop the heat transfer from the heat generating device (11) to the ambience of the vehicle (1) while the vehicle (1) is still supplied with electric energy from an electric line (6) of the route.

15. The vehicle of any one of claims 9 to 14, wherein the heat generating device (11) is an electrified route (R1) dependent heat generating device (11) that is adapted to be operated only and/or to generate heat at a higher rate while the vehicle (1) is stopping or traveling on an electrified route (R1) while being provided with electric energy from an electric line (6) of the route.
